Europäisches Patentamt

European Patent Office

Office européen des brevets

(19)

(11) Numéro de publication : **0 362 067 B1**

## (12) FASCICULE DE BREVET EUROPEEN

(45) Date de publication du fascicule du brevet :
**18.12.91 Bulletin 91/51**

(51) Int. Cl.⁵ : **F16L 41/08**

(21) Numéro de dépôt : **89402666.5**

(22) Date de dépôt : **28.09.89**

(54) **Procédé de montage d'une pièce en matériau souple sur un support et pièce pour sa mise en oeuvre.**

(30) Priorité : **30.09.88 FR 8812803**

(43) Date de publication de la demande :
**04.04.90 Bulletin 90/14**

(45) Mention de la délivrance du brevet :
**18.12.91 Bulletin 91/51**

(84) Etats contractants désignés :
**BE DE ES GB IT LU NL SE**

(56) Documents cités :
**FR-A- 2 593 753**

(73) Titulaire : **HUTCHINSON S.A. une Société
Anonyme dotée d'un Conseil de Surveillance
et d'un Directoire
2, rue Balzac
F-75008 Paris (FR)**

(72) Inventeur : **Lalande, Roger
Le Plessis
F-61250 Forges (FR)**
Inventeur : **Morin, Jean-Pierre
6, Impasse des Colombes
F-72610 Saint-Paterne (FR)**

(74) Mandataire : **Orès, Bernard et al
Cabinet ORES 6, Avenue de Messine
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne le montage de pièces en matériau souple à chausser sur un support ou dans une découpe d'un support et notamment le montage d'éléments tels que des joints, manchettes, soufflets, manchons, obturateurs, coupelles et autres pièces à raccorder sur une paroi, à la périphérie de celle-ci ou dans une découpe borgne, ou traversante qu'elle présente.

Elle vise, plus précisément, un procédé de montage d'une pièce en matériau souple et élastique sur un support ou dans une découpe ainsi que les pièces en matériau souple et élastique notamment les manchettes, joints, soufflets, obturateurs, coupelles, manchons, et autres éléments de raccord pour la mise en oeuvre du procédé.

Lorsqu'ils sont utilisés dans l'industrie automobile, notamment pour le montage des réservoirs de carburant des véhicules, ces éléments doivent à la fois absorber les inévitables dispersions de positions entre la tubulure conduisant au réservoir et la paroi de la carrosserie du véhicule, protéger la tubulure en cas de choc et assurer une étanchéité parfaite aussi bien au liquide qu'aux vapeurs que le carburant est susceptible de dégager. En outre, cette étanchéité ne doit pas être affectée par les mouvements relatifs du réservoir et de la carrosserie. Bien qu'ils assurent généralement les fonctions requises, les raccords connus, voir par exemple FR-A-2593753, ne sont pas pour autant entièrement satisfaisants, notamment, en raison du temps nécessaire à leur montage qui est effectué soit par déformation locale, soit par utilisation d'un accessoire, comme un fil, dans le procédé dit "à la ficelle". Etant donné, cependant, les tendances actuelles d'automatisation des opérations de l'industrie automobile, de même que les recherches de gain de productivité, ces procédés usuels de montage ne sont pas entièrement appropriés et c'est précisément un but de l'invention de fournir un procédé de montage d'une pièce souple qui soit à la fois simple, rapide et ne fasse pas appel à un outillage spécial.

C'est, aussi, un but de l'invention de fournir un tel procédé qui puisse être automatisé.

Le procédé suivant l'invention, de montage d'une pièce en matériau souple sur un support ou autour d'une découpe à chausser par emboîtement d'une gorge de ladite pièce sur la périphérie de ladite découpe ou dudit support est caractérisé en ce que ledit emboîtement résulte du déploiement d'une lèvre limitant au moins en partie ladite gorge entre une première condition, — dans laquelle la lèvre est amenée avant montage pour emmagasiner de l'énergie élastique —, et une seconde condition qui amène ladite gorge d'elle-même en position d'emboîtement par restitution de ladite énergie après que le déploiement ait été déclenché.

Pour déclencher le déploiement de la lèvre, l'invention prévoit soit d'exercer une traction sur la lèvre proprement dite ou sur un organe qui lui est associé, soit d'exercer une poussée suivant une direction ou en une zone particulière de la pièce après que celle-ci ait été mise en place au voisinage immédiat du support ou de la découpe à chausser.

Quel que soit le procédé, l'invention propose, pour sa mise en oeuvre, une pièce en matériau souple comportant une lèvre limitant en condition de montage ou moins une partie d'une gorge d'emboîture du support ou d'une découpe, caractérisée en ce que la lèvre est conformée d'une part, et l'élasticité intrinsèque du matériau choisie de manière telle, d'autre part, que ladite lèvre qui est reliée au reste de la pièce par une zone charnière est propre à se déployer d'elle-même autour de cette zone, après amorçage, d'une première position d'équilibre en attente à une seconde position d'équilibre stable correspondant à la condition de montage.

La lèvre est de préférence conformée suivant un contour fermé et le matériau choisi parmi des élastomères, simples ou des mélanges ou des composites, ou des matériaux analogues.

Dans le cas d'un matériau élastomère celui-ci est choisi dans les échelles de dureté A, B, C ou D et présente de préférence une dureté comprise entre 30 et 75 Shore A.

En variante, la lèvre est conformée suivant un contour ouvert.

Dans l'un et/ou l'autre cas, elle est à section uniforme sur toute sa longueur périphérique.

En variante, elle est à section variable pour une meilleure adaptation à la forme et/ou à la courbure du support ou de la découpe que ladite pièce doit chausser.

Dans une forme de réalisation préférée, la gorge d'emboîture du support ou de la découpe que la pièce est destinée à équiper est limitée par ladite lèvre et par un bourrelet profilé formant l'extrémité de la pièce, la lèvre et le bourrelet étant réunis par une âme qui ménage la charnière de déploiement de la lèvre et le fond de la gorge dans la condition de montage.

Dans une exécution avantageuse, l'ensemble de la pièce est fabriqué à partir d'un ou d'élastomère(s) naturel(s) ou synthétique(s) et/ou de matériau(x) analogue(s), la configuration de fabrication étant celle de la condition déployée de la lèvre qui est ensuite repliée autour de la zone de charnière pour lui faire emmagasiner l'énergie nécessaire à son "auto-dépliage" ultérieur.

Le profil de la gorge est choisi en fonction des desiderata de la pratique et présente, dans une réalisation préférée, un contour quelque peu trapézoïdal, limité par un bord rectiligne du bourrelet, un bord interne de la lèvre et un bord interne à extrémités arrondies de l'âme qui réunit le bourrelet à la lèvre.

Dans une réalisation de pièce particulièrement destinée au montage de la tubulure de remplissage du réservoir de carburant d'un véhicule automobile, ladite pièce a la forme d'un bol ou coupelle dont le fond percé pour le passage de la tubulure de remplissage du réservoir est incliné par rapport au plan moyen de la lèvre de montage de la pièce dans une découpe de la tôle de carosserie du véhicule.

D'autres caractéristiques et avantages de l'invention apparaîtront de la description qui suit, faite à titre d'exemple et en référence au dessin annexé dans lequel :

— la figure 1 est une vue partielle, en coupe, d'une partie de pièce suivant l'invention dans une première condition ;

— la figure 2 est une vue partielle analogue à celle de la figure 1 pour une autre condition ;

— la figure 3 est une vue en coupe d'une pièce suivant l'invention avant montage sur la tôle de carrosserie d'un véhicule automobile ;

— la figure 4 est une vue en coupe de la pièce de la figure 3 après montage ;

— la figure 5 est une vue en perspective de face de la pièce suivant les figures 3 et 4 dans la condition initiale de déploiement de la lèvre qu'elle comporte ;

— la figure 6 est une vue analogue à celle de la figure 5 mais dans une autre condition de déploiement de la lèvre ;

— les figures 7 à 9 sont des vues partielles en coupe montrant diverses conditions d'une autre pièce selon l'invention.

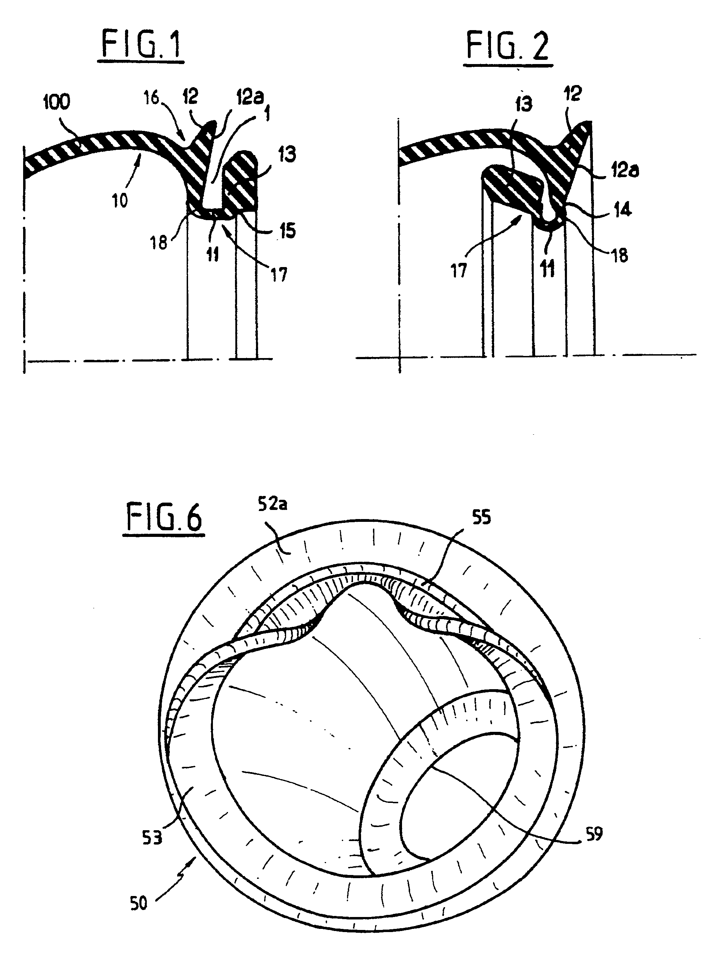

On se réfère d'abord aux figures 1 et 2 qui illustrent le procédé et la structure d'une pièce selon l'invention. Une telle pièce 10, qui peut être un manchon, un soufflet, un joint, un obturateur de tôle de tablier d'automobile, une coupelle de réservoir de carburant de véhicule, etc..., comprend un corps 100 dont une extrémité a la forme d'une gorge 1, figure 1, définie par un fond 11, un fianc intérieur 12 et un flanc extérieur 13 pour sa fixation sur la périphérie de la découpe d'une paroi (non représentée), sur laquelle la pièce est à monter.

Alors que le flanc 12 est ménagé par un bourrelet profilé 16, monobloc avec le corps 100, le fond 11 et le flanc 13 constituent une lèvre 17 qui, selon l'invention, est propre à se déployer d'elle-même, après amorçage, d'une première position d'équilibre en attente à une seconde position d'équilibre stable correspondant à la condition de montage.

Pour ce faire, la pièce 10 en matériau souple, avantageusement fabriquée dans la condition correspondant au montage et qui est celle montrée sur la figure 1 est amenée dans la condition montrée sur la figure 2 par retournement ou rabattement du flanc 13 derrière la face arrière du flanc 12 en faisant application des caractéristiques de déformabilité de la zone 18 de liaison du fond ou âme 11 au bourrelet 12. Par un choix approprié du matériau de la pièce 10, en combinaison avec la forme du bourrelet et de la lèvre, ce retournement emmagasine dans ladite lèvre 17 une certaine quantité d'énergie permettant le montage simple, rapide et pouvant être rendu automatique de la pièce 10 sur la découpe de la paroi qu'elle est destinée à équiper.

Conformément au procédé de l'invention, la gorge 1 est amenée à emboîter la périphérie de la découpe par déploiement de la lèvre 17 autour de la zone charnière 18 après que ledit déploiement ait été déclenché ou amorcé en un point quelconque P de sa périphérie en tirant partie de la libération de l'énergie élastique précédemment emmagasinée. L'amorce de déploiement peut être réalisée en exerçant une traction sur la lèvre 17, ou sur un organe qui lui est associé, ou encore en exerçant une poussée suivant une direction ou en zone particulière du corps 100 ou de la lèvre 17 elle-même.

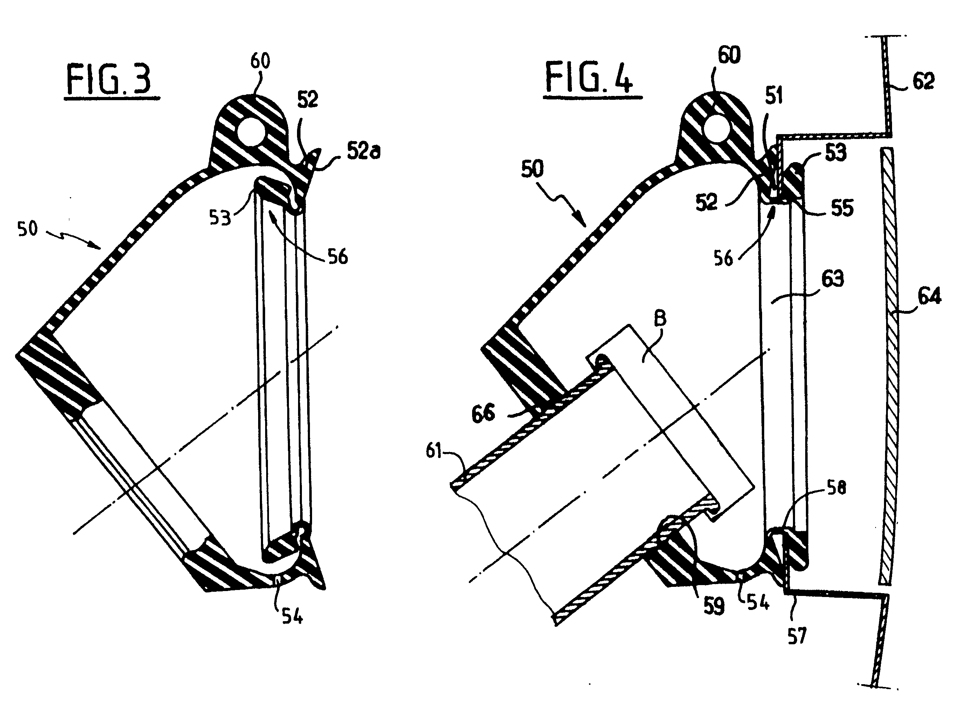

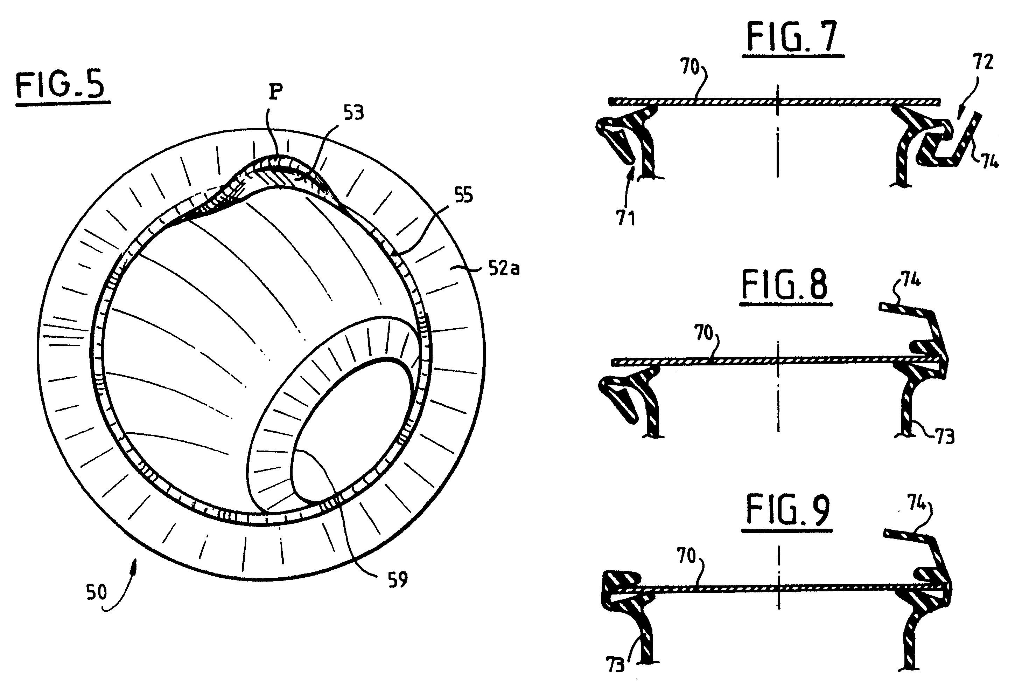

On se réfère maintenant aux figures 3 à 6 qui illustrent l'application de l'invention à une coupelle de réservoir de véhicule automobile. Comme montré sur la figure 4, une coupelle de réservoir 50 suivant l'invention raccordant la tubulure 61 du réservoir d'essence d'un véhicule automobile à une paroi 62 de la carrosserie du véhicule est percée d'un orifices 63 donnant accès au réservoir ou plus précisément au bouchon B de réservoir après retrait ou relevage de la porte de trappe 64. La coupelle 50 assure à la fois le maintien souple de la tubulure ; absorbant chocs et vibrations, et la protection de la carrosserie et des passagers du véhicule vis-à-vis de l'essence, des eaux de puie ou de lavage par égouttage au travers d'un évent 54. La coupelle 50, préalablement mise en place en atelier sur la tubulure 61 par encliquetage à force d'une bossage circulaire 66 de l'extrémité de la tubulure dans une gorge circulaire 59 de l'orifice inférieur de la coupelle est présentée contre la paroi 62 avec le flanc 53 de la gorge 51 en position rabattue, c'est-à-dire avec la lèvre 56 (analogue à la lèvre 17 de la réalisation précédente) dans la position montrée sur la figure 3. Après appui de la lèvre 56 par sa face 52a sur la périphérie intérieure 57 de la découpe 58 de la tôle 62, on commande le déploiement de la lèvre 56 en amorçant celui-ci en un point P quelconque de sa périphérie, figure 5. Une fois ce déploiement ou dépliage amorcé (par une simple traction manuelle, directement ou à l'aide d'un outil quelconque, ou par un robot) la totalité de la périphérie de la lèvre 56 se déplie d'elle-même, automatiquement, jusqu'a occuper la position montrée sur la figure 4, — en laquelle elle chausse avec léger serrage la découpe 58 entre son flanc 52 et son flanc 53—, après passage par une condition comme montrée sur la figure 6 qui est celle de presque fin de déploiement.

De même que la pièce montrée schématiquement sur les figures 1 et 2, la coupelle 50 est fabriquée en élastomère dans sa condition montrée sur la figure 4, qui est celle de montage de la coupelle sur la découpe 58. La fabrication de la coupelle 50 peut être réalisée par soufflage, thermo-formage ou procédé analogue. Dans le cas d'une fabrication par moulage, une oreille 60, au voisinage de la lèvre 56, sert au démoulage.

Dans une réalisation ayant donné de bons résultats, la coupelle en nitrile/PVC d'une dureté Shore A de 55 avait un diamètre de son ouverture 63 de 110 mm environ. La lèvre 56 dont le profil en section droite était comme visible sur les figures 3 et 4 avait une âme d'environ 1,5 mm d'épaisseur et d'une longueur d'environ 4,5 mm ; le flanc 52 d'une hauteur d'environ 16,5 mm présentait une face 52a inclinée d'environ 18° sur la direction longitudinale du flanc 53, lui-même d'une hauteur d'environ 11,5 mm et d'une épaisseur d'environ 6,5 mm.

On se réfère maintenant aux figures 7 à 9 relatives à une autre réalisation, prévue pour le montage d'une pièce non plus dans une découpe, comme décrit ci-dessus, mais sur la périphérie d'un support constitué par une plaque 70. La pièce 71 en matériau souple, par exemple un élastomère d'une dureté Shore A comprise entre 30 et 75 est fabriquée dans sa condition correspondant au montage sur la plaque, figure 9, puis la lèvre 72 qu'elle présente, — analogue à la lèvre 17 de la réalisation des figures 1 et 2 —, est retournée pour que la pièce soit dans la condition montrée sur la figure 7 en laquelle la lèvre a emmagasiné de l'énergie élastique qu'elle restitue lors du déploiement de la lèvre (figure 8) provoqué par un amorçage qui consiste le plus simplement en une traction sur ladite lèvre ou sur un appendice 74 qu'elle présente, ou une pression de direction spécifique sur le corps 73 de la pièce ou en une zone particulière de ce dernier. Quel que soit le mode de déclenchement ou d'amorçage, celui-ci est effectué après que la pièce ait été amenée au contact de la plaque 70, figure 7, cette amenée, de même que cet amorçage, pouvant être réalisés à l'aide d'un robot ou analogue.

On obtient ainsi, selon l'invention, un procédé de montage d'une pièce en un matériau souple sur un support ou dans une découpe qui peut être facilement automatisé. En outre, le montage ainsi réalisé assure une bonne résistance à un effort d'arrachement, notamment dans une direction orthogonale au plan moyen de la lèvre tout en permettant, en cas de besoin, un déchaussage rapide sous l'action d'un effort exercé dans le plan moyen de ladite lèvre.

La lèvre "auto-dépliante" n'est pas nécessairement circulaire, ou plane, mais peut avoir toute autre forme, notamment ovale, rectangulaire, carrée et s'étendre suivant une surface gauche correspondant à la forme de la découpe ou de la paroi qu'elle est destinée à chausser.

Elle peut également être fabriquée d'un seul tenant ou, en variante, être réalisée en matériaux différents le long de son envergure périphérique ou radiale.

## Revendications

1. Procédé de montage d'une pièce en matériau souple sur un support ou autour d'une découpe à chausser par emboîtement d'une gorge de ladite pièce sur la périphérie de ladite découpe ou dudit support, caractérisé en ce que ledit emboîtement résulte du déploiement d'une lèvre limitant au moins en partie ladite gorge entre une première condition, — dans laquelle la lèvre est amenée avant montage pour emmagasiner de l'énergie élastique —, et une seconde condition qui amène ladite gorge d'elle-même en position d'emboîtement par restitution de ladite énergie après que le déploiement ait été déclenché.

2. Procédé selon la revendication 1, caractérisé en ce que pour déclencher le déploiement de la lèvre, on exerce une traction ou une poussée sur ladite lèvre proprement dit, ou sur un organe qui lui est associé, ou sur le corps de la pièce elle-même suivant une direction ou en une zone particulière après que la pièce ait été mise en place ou voisinage immédiat du support ou de la découpe à chausser.

3. Pièce en matériau souple destinée à chasser un support ou découpe par emboîtement d'une gorge limitée par une lèvre qu'elle présente en condition de montage, caractérisée en ce que la lèvre (17, 56, 73) est conformée d'une part, et l'élasticité intrinsèque du matériau choisie de manière telle, d'autre part, que ladite lèvre qui est reliée au reste de la pièce par une zone charnière (18) est propre à ce déployer d'elle-même autour de cette zone, après amorçage, d'une première position d'équilibre en attente à une seconde position d'équilibre stable correspondant à la condition de montage.

4. Pièce selon la revendication 3, caractérisée en ce que la lèvre (17, 56, 72) est conformée suivant un contour fermé et le matériau choisi parmi les élastomères simples ou en mélanges, des composites ou matériaux analogues.

5. Pièce selon la revendication 4, caractérisée en ce que son matériau constitutif est un élastomère choisi dans les échelles de dureté A, B, C ou D et présente, de préférence une dureté comprise entre 30 et 75 Shore A.

6. Pièce selon la revendication 3, caractérisée en ce que la lèvre est conformée suivant un contour ouvert.

7. Pièce selon la revendication 3, caractérisée en ce que la lèvre (17, 56, 72) est à section uniforme sur toute sa longueur périphérique.

8. Pièce selon la revendication 3, caractérisée en ce que la lèvre est à section variable sur sa longueur périphérique.

9. Pièce selon la revendication 3, caractérisée en ce que la gorge d'emboîture (1, 51) du support (70) ou de la découpe (58) que la pièce (10, 50) est destinée à équiper est limitée par ladite lèvre (17, 56, 72) et par un bourrelet profilé (16, 52) formant l'extrémité de la pièce (10, 50), la lèvre et le bourrelet étant réunis par une âme (11) qui ménage la charnière de déploiement (18) de la lèvre et le fond de la gorge dans la condition de montage.

10. Pièce selon l'une quelconque des revendications 3 à 9, caractérisée en ce qu'elle est fabriquée à partir d'un ou d'élastomère(s) naturel(s) ou synthétique(s) et/ou de matériau(x) analogue(s), la configuration de fabrication étant celle de la condition déployée de la lèvre qui est ensuite repliée autour de la zone de charnière pour lui faire emmagasiner l'énergie nécessaire à son "auto-dépliage" ultérieur.

11. Pièce selon l'une quelconque des revendications 3 à 10, notamment coupelle de réservoir de carburant de véhicule automobile, caractérisée en ce que sa lèvre de montage (56) sur la découpe (58) d'une tôle de carrosserie (57) limite une gorge (51) à contour quelque peu trapézoïdal défini par le bord rectiligne d'un bourrelet (52), un bord interne du flanc extérieur (53) de la lèvre et un bord interne à extrémités arrondies reliant le flanc extérieur (53) au bourrelet (52).

12. Pièce selon la revendication 11, caractérisée en ce que son matériau constitutif est un nitrile/PVC d'une dureté Shore A d'environ 55.

## Patentansprüche

1. Verfahren zum Anbringen eines Teils aus biegsamen Material auf einen abzudeckenden Träger oder um eine Aussparung durch Aufsetzen einer Auskehlung des genannten Teils auf den Umfang der Aussparung oder des Trägers, dadurch gekennzeichnet, daß sich das Aufsetzen aus dem Auseinanderfalten einer Lippe ergibt, die mindestens zum Teil die genannte Auskehlung begrenzt, zwischen einer ersten Stellung — in die die Lippe zum Speichern von elastischer Energie vor dem Anbringen gebracht wird — und einer zweiten Stellung, in die die Auskehlung selbst durch Energiewiedergabe nach Auslösung des Auseinanderfaltens in die Aufsetzstellung gebracht wird.

2. Verfahren nach Anspruch 1, dadurch gekennzeichnet, daß zum Auslösen des Auseinanderfaltens der Lippe, ein Zug oder ein Druck direkt auf die eigentliche Lippe oder auf eine ihr zugeordnete Einrichtung oder auf den Körper des Teils selbst in einer Richtung oder auf eine bestimmte Zone ausgeübt wird, nachdem das Teil in unmittelbarer Nähe des Trägers oder der abzudeckenden Aussparung angebracht wurde.

3. Teil aus biegsamen Material, das bestimmt ist zum Abdekken eines Trägers oder einer Aussparung durch Aufsetzen einer Auskehlung, die durch eine in Anbringungsstellung befindliche Lippe begrenzt ist, dadurch gekennzeichnet, daß die Lippe (17, 56, 73) einerseits in bestimmter Weise ausgeformt ist und andererseits die spezifische Biegsamkeit des Materials so ausgesucht ist, daß die Lippe, die mit dem übrigen Teil durch eine Gelenkzone (18) verbunden ist, sich von selbst um diese Zone herum ausfaltet, wenn diese von einer ersten vorübergehenden Gleichgewichts- und Bereitschaftsstellung in eine zweite stabile Gleichgewichtsstellung entsprechend der Anbringungsstellung übergeht.

4. Teil nach Anspruch 3, dadurch gekennzeichnet, daß die Lippe (17, 56, 72) gemäß einem geschlossenen Umriß ausgeformt ist und das Material aus einfachen Elastomeren oder Gemischen, aus Verbindungen oder ähnlichen Materialien ausgewählt ist.

5. Teil nach Anspruch 4, dadurch gekennzeichnet, daß sein wesentliches Material ein Elastomer ist, ausgewählt aus den Härteskalen A, B, C oder D und vorzugsweise eine Härte zwischen 30 und 75 Shore A aufweist.

6. Teil nach Anspruch 3, dadurch gekennzeichnet, daß die Lippe gemäß einem offenen Umriß ausgeformt ist.

7. Teil nach Anspruch 3, dadurch gekennzeichnet, daß die Lippe (17, 56, 72) einen gleichmäßigen Querschnitt über ihre ganze Umfangslänge aufweist.

8. Teil nach Anspruch 3, dadurch gekennzeichnet, daß die Lippe einen variablen Querschnitt über ihre Umfangslänge aufweist.

9. Teil nach Anspruch 3, dadurch gekennzeichnet, daß die auf den Träger (70) oder die Aussparung (58) anzubringende Auskehlung (1, 51) des Teils (10, 50) durch die Lippe (17, 56, 72) und durch einen das Ende (10, 50) des Teils bildenden Profilwulst (16, 52), begrenzt ist, wobei die Lippe und der Wulst durch einen Steg (11) verbunden sind, der das Ausfaltgelenk (18) der Lippe und den Boden der Auskehlung in der Anbringungsstellung bildet.

10. Teil nach einem der Ansprüche 3 bis 9, dadurch gekennzeichnet, daß es aus einem oder mehreren natürlichen oder synthetischen Elastomer(en) und/oder ähnlichen Material(ien) hergestellt ist, wobei der Herstellungsaufbau in der ausgefalteten Stellung der Lippe erfolgt, die danach um die Gelenkzone gestülpt wird, so daß, die zu ihrer nachträglichen "Selbstausfaltung" notwendige Energie gespeichert wird.

11. Teil nach einem der Ansprüche 3 bis 10, insbesondere bestimmt für einen Treibstofftank eines Kraftfahrzeugs, dadurch gekennzeichnet, daß die Lippe (56) zum Anbringen auf der Aussparung (58) eines Karosseriebleches (57) eine Auskehlung (51) begrenzt, mit einem annähernd trapezförmigen Umriss, der durch den geradlinigen Rand eines Wulstes (52), einen inneren Rand der Außenseite (53) der Lippe und einen Innenrand mit abgerundeten Enden, der die Außenseite (53) mit dem Wulst (52) verbindet, bestimmt ist.

12. Teil nach Anspruch 11, dadurch gekennzeichnet, daß sein wesentliches Material ein Nitril/PVC mit einer Shore A Härte von etwa 55 ist.

## Claims

1. A method of mounting a part of flexible material on a support or around a cut-out to be fitted therewith, by engaging a groove of said part on the periphery of said cut-out or said support, the method being characterized in that engagement is obtained by deploying a lip delimiting at least a portion of the said groove between a first condition in which the lip is put prior to assembly in order to store energy resiliently and a second condition which brings the said groove automatically into its engagement position by restoring the said energy once the deployment has been triggered.

2. A method according to claim 1, characterized in that in order to trigger the deployment of the lip, traction or thrust is exerted on the said lip per se or on a member which is associated therewith, or on the body of the part itself at a special zone or in a special direction after the part has been put into place or in the immediate vicinity of the support or the cut-out to be fitted therewith.

3. A part made of flexible material for fitting to a support or a cut-out by engagement between a groove delimited by a lip which the part presents when in the assembled condition, the part being characterized in that the lip (17, 56, 73) is shaped and the intrinsic resilience of the material from which it is made is selected in such a manner that said lip which is connected to the remainder of the part via a hinge zone (18) is suitable for deploying itself about said zone after being triggered from a first, waiting equilibrium position to a second stable equilibrium position corresponding to the assembled condition.

4. A part according to claim 3, characterized in that the shape of the lip (17, 56, 72) extends around a closed outline and the material is selected from single elastomers or mixtures thereof, composites, or analogous materials.

5. A part according to claim 4, characterized in that it is made from a material constituted by an elastomer selected from hardness scales A, B, C, or D, and which preferably has a hardness lying in the range 30 to 75 on the Shore A scale.

6. A part according to claim 3, characterized in that the shape of the lip extends around an open contour.

7. A part according to claim 3, characterized in that the lip (17, 56, 72) is of uniform cross-section along the entire length of its perphery.

8. A part according to claim 3, characterized in that the lip is of along cross-section als its peripheral length.

9. A part according to claim 3, characterized in that the engagement groove (1, 51) of the support (70) or of the cut-out (58) to which the part (10, 50) is intended to be fitted is delimited by said lip (17, 56, 72) and by a shaped rim (16, 52) constituting the end of the part (10, 50), the lip and the rim being interconnected by a web (11) which provided a deployment hinge (18) for the lip and which provides the bottom of the groove in the assembled condition.

10. A part according to any one of claims 3 to 9, characterized in that it is made from a natural or synthetic elastomer(s) and/or analogous material(s), with the configuration in which it is made corresponding to the deployed configuration of the lip, which lip is subsequently folded bark around the hinge zone so as to cause it to store the energy required for its subsequent "self-unfolding".

11. A part according to any one of claims 3 to 10, in particular an inlet bellows for a motor vehicle fuel tank, the part being characterized in that the assembly lip (56) for fitting to the cut-out (58) in a sheet of bodywork (57) delimits a groove (51) having a somewhat trapezoidal outline defined by the rectilinear edge of a rim (52), an inner edge of the outer flank (53) of the lip, and an inner having rounded ends connecting the outer flank (53) to the rim (52).

12. A part according to claim 11, characterized in that it is made of a nitrile/PVC having a hardness of about 55 on the Shore A scale.

# FIG.1

# FIG.2

# FIG.6

FIG.3

FIG.4

EP 0 362 067 B1

FIG.5

P

53

55

52a

50

59

FIG.7

70

71

72

74

FIG.8

74

70

73

FIG.9

74

70

73

EP 0 362 067 B1